# EUROPEAN PATENT APPLICATION

(11) **EP 4 421 940 A1**
(43) Date of publication of application: **28.08.2024**
(21) Application number: 23877566.2
(22) Date of filing: 26.09.2023
(51) Int. Cl.: H01M 10/0585, H01M 10/0562, H01M 10/052

(54) **ELECTRODE ASSEMBLY AND SECONDARY BATTERY COMPRISING SAME**

(30) Priority: 12.10.2022 KR 20220130634
(71) Applicant: LG Energy Solution, Ltd., Seoul 07335 (KR)
(72) Inventor: LEE, Jaegil, Daejeon 34122 (KR); WOO, Seunghe, Daejeon 34122 (KR)
(74) Representative: Goddar, Heinz J.
(86) International application number: PCT/KR2023/014934
(87) International publication number: WO 2024/080638

(57) **Abstract**

An electrode assembly, wherein the laminated structure is partially or wholly pyramidal in shape, thereby mitigating a short phenomenon occurring at a lateral portion during battery operation, and a secondary battery comprising same are prepared.

The electrode assembly, wherein a negative electrode layer having negative electrode active material layers on both sides of a negative electrode current collector; and a positive electrode layer having a first positive electrode active material layer and a second positive electrode active material layer respectively on both sides of a positive electrode current collector are alternately laminated, and solid electrolyte layers are each placed between the positive and negative electrode layers, respectively, wherein, in the positive electrode layer, the first positive electrode active material layer and the second positive electrode active material layer have different lengths extending from the centerline of the positive electrode current collector in the directions of both ends of the positive electrode current collector, wherein the length of the negative electrode active material layer facing the relatively short first positive electrode active material layer is equal to or shorter than the length of the relatively long second positive electrode active material layer.

## Description

### [Technical Field]

This application claims the benefit of priority based on Korean Patent Application No. 10-2022-0130634 filed on October 12, 2022, all contents of which are incorporated as a part of the present specification.

The present invention relates to an electrode assembly and a secondary battery comprising same, more particularly, an electrode assembly, wherein the laminated structure is partially or wholly pyramidal, thereby mitigating a short phenomenon occurring at a lateral portion of the battery during operation, and a secondary battery comprising same.

### [Background Art]

With the explosive growth in technology development and demand for mobile devices and automobiles, more research is being done on secondary batteries with high energy density, discharge voltage, and good output stability. Such secondary batteries include lithium-based secondary batteries such as lithium-sulfur batteries, lithium-ion batteries and lithium-ion polymer batteries. Furthermore, these secondary batteries can be categorized into cylindrical, prismatic and pouch-type batteries depending on their shape, and attentions and demands on pouch-type batteries are increasing. Pouch-type battery cells can be laminated with high integration and have high energy density per weight, and they are also inexpensive and easy to be modified. Therefore, pouch-type battery cells can be fabricated into shapes and sizes that are applicable to various mobile devices and automobiles.

These pouch-type battery cells have a laminated structure of multiple unit cells, typically including a positive electrode, a negative electrode, and a separating film interposed between the positive and negative electrodes (i.e., an electrode assembly or a stack cell), and these cells can be productized by introducing the electrode assembly in a battery case and then injecting an electrolyte, or introducing a solid electrolyte in the electrode assembly from the outset (i.e., an all-solid-state battery).

Among them, all-solid-state batteries are superior to other types of secondary batteries in terms of safety, and are gaining attention in the field of electric vehicles and mobile devices. In other words, all-solid-state batteries are batteries that replace the electrolyte used in conventional lithium secondary batteries from a liquid to a solid, and as a result, safety can be greatly improved by not using flammable solvents, so that ignition or explosion caused by decomposition reactions of conventional electrolytes does not occur at all. In addition, all-solid-state batteries have the advantage of dramatically improving the energy density relative to the mass or volume of the battery because Li metal or Li alloy can be used as the negative electrode material.

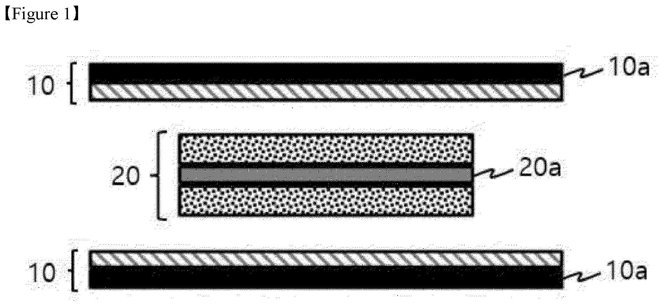

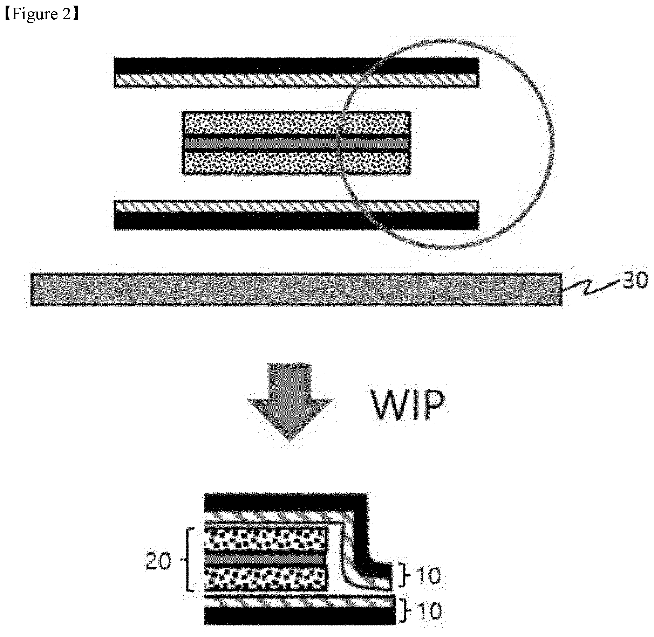

These all-solid-state batteries typically utilize a warm isostatic pressing (WIP) to create an interfacial bond between the electrode and the solid electrolyte during fabrication. FIG. 1 is a side view schematic illustrating the electrode lamination of a conventional all-solid-state battery, and FIG. 2 is a side view schematic illustrating a conventional all-solid-state battery which is isostatic pressurized. That is, a conventional all-solid-state battery generally has a positive electrode (20) (20a is a positive electrode current collector) having a length shorter than that of the negative electrode (10) (10a is a negative electrode current collector) interposed between the negative electrodes (10) as shown in FIG. 1 (for the purpose of more clearly illustrating the positional relationship between the electrodes, the solid electrolyte layers each positioned between the positive electrode and the negative electrode are not shown in the drawing). However, if isostatic pressurization (WIP) is carried out to create an interfacial bond between the electrode and the solid electrolyte (30: metal plate used during isostatic pressurization), as shown in FIG. 2, the end portion (or lateral portion) of the negative electrode (10) located at the upper portion is bent, and the solid electrolyte layer and the negative electrode layer are prone to cracking in the course of this process, and since a proper pressure cannot be applied to this portion during operation, a condition prone to lithium dendrite growth occurs, and a short phenomenon occurs.

In other words, since conventional all-solid-state batteries have the form shown in FIG. 1 or 2, a short phenomenon occurs between the end portion of the upper negative electrode and the lateral portion of the end portion of the positive electrode facing the negative electrode during operation. Therefore, it is necessary to find a way to mitigate and suppress a short phenomenon between the positive electrode and the negative electrode during battery operation by having an electrode form that can alleviate the bending of the negative electrode after isostatic pressurization.

### [Disclosure]

### [Technical Problem]

Accordingly, the present invention aims to provide an electrode assembly, wherein the laminated structure is partially or wholly pyramidal, thereby mitigating a short phenomenon that occurs at the lateral portion during battery operation, and a secondary battery comprising same.

### [Technical Solution]

To achieve the objective, the present invention provides an electrode assembly in which a negative electrode layer having negative electrode active material layers on both sides of a negative electrode current collector; and a positive electrode layer having a first positive electrode active material layer and a second positive electrode active material layer respectively on both sides of a positive electrode current collector are alternately laminated, and solid electrolyte layers are each placed between the negative electrode layer and the positive electrode layer, respectively, wherein, in the positive electrode layer, the first positive electrode active material layer and the second positive electrode active material layer extending from the centerline of the positive electrode current collector in the directions of both ends of the positive electrode current collector have different lengths, wherein the length of the negative electrode active material layer facing the relatively shorter first positive electrode active material layer is equal to or shorter than the length of the relatively longer second positive electrode active material layer.

The present invention also provides a secondary battery comprising the electrode assembly; and a storage case comprising the electrode assembly.

### [Effects of the Invention]

The electrode assembly and the secondary battery comprising same according to the present invention have the laminated structure which is partially or wholly pyramidal, and have the advantage of mitigating a short phenomenon that occurs at the lateral portion of the battery during operation.

### [Description of Drawings]

FIG. 1 is a side view schematic illustrating the lamination of the electrodes of a conventional all-solid-state battery.
FIG. 2 is a schematic illustrating an one-sided cross-section of a conventional all-solid-state cell which is isostatic pressurized.
FIG. 3 is a side view schematic illustrating the lamination of the electrodes of an all-solid-state battery according to one embodiment of the present invention.
FIG. 4 is a schematic illustrating an one-sided cross-section of an all-solid-state battery which is isostatically pressurized, according to one embodiment of the present invention.
FIG. 5 is a side view schematic illustrating the lamination of the electrodes of an all-solid-state battery according to another embodiment of the present invention.
FIG. 6 is a graph comparing the life characteristic and capacity of secondary batteries manufactured in accordance with the working example and the comparative example of the present invention.

### [Best Mode]

The present invention is described in detail with reference to the drawings attached hereto.

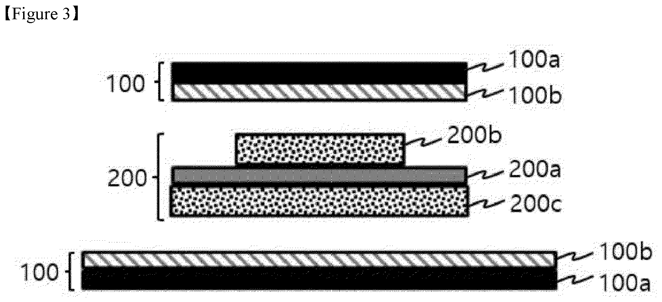

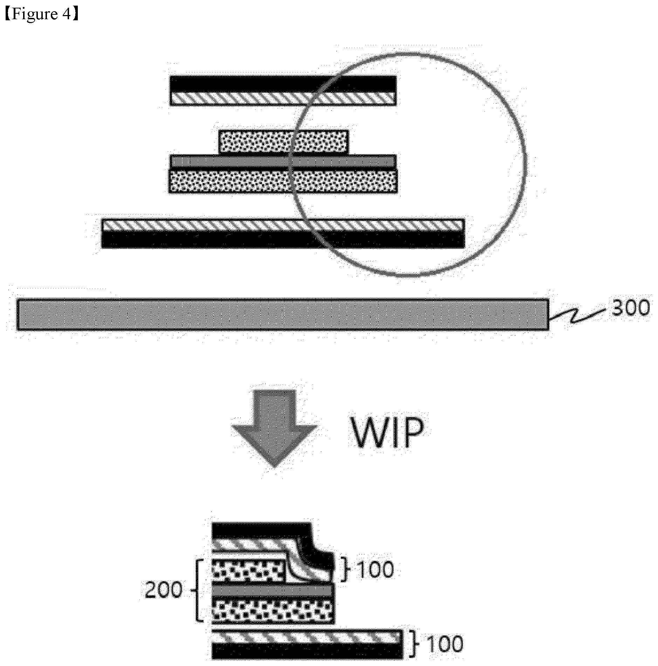

FIG. 3 is a side cross-sectional view illustrating the lamination of the electrodes of an all-solid-state battery according to one embodiment of the present invention, and FIG. 4 is a side cross-sectional view illustrating an all-solid-state battery which is isostatically pressurized according to one embodiment of the present invention.

As shown in FIG. 3, the electrode assembly according to the present invention is characterized in that a negative electrode layer (100) having negative electrode active material layers (100b) on both sides of a negative electrode current collector (100a); and a positive electrode layer (200) having a first positive electrode active material layer (200b) and a second positive electrode active material layer (200c) respectively on both sides of a positive electrode current collector (200a) are laminated alternately, and solid electrolyte layers are each positioned between the negative electrode layer and the positive electrode layer (for the purpose of more clearly illustrating the positional relationship between the electrodes, the solid electrolyte layers each positioned between the negative electrode layer (100) and the positive electrode layer (200) are not shown in the drawing), wherein, in the positive electrode layer (200), the first positive electrode active material layer (200b) and the second positive electrode active material layer (200c) extending from the centerline of the positive electrode current collector (200a) in the directions of both ends of the positive electrode current collector (200a) have different lengths, wherein the length of the negative electrode active material layer facing the relatively shorter length of the first positive electrode active material layer (200b) is equal to or shorter than the length of the relatively longer second positive electrode active material layer (200c).

All-solid-state batteries are becoming popular, especially in the electric vehicle and mobile device fields, due to their superiority over other types of secondary batteries in terms of safety. In other words, all-solid-state batteries are batteries that replace the electrolyte used in conventional lithium secondary batteries from a liquid to a solid, which greatly improves safety by not using flammable solvents, so that ignition or explosion caused by decomposition reactions of conventional electrolytes does not occur at all. In addition, all-solid-state batteries have the advantage of dramatically improving the energy density relative to the mass and volume of the battery because Li metal or Li alloy can be used as the negative electrode material.

These all-solid-state batteries typically utilize a warm isostatic pressing (WIP) for interfacial bonding between the electrode and the solid electrolyte during fabrication. In other words, a conventional all-solid-state battery generally has a positive electrode (20) (20a is a positive electrode current collector), which is shorter than the negative electrode (10) (10a is a negative electrode current collector), interposed between the negative electrodes (10) (for the purpose of more clearly illustrating the positional relationship between the electrodes, the solid electrolyte layers each positioned between the positive electrode and the negative electrode are not shown in the drawing). This is to prevent lithium (Li) precipitation on the sliding part due to the difference between the contact areas of the positive electrode and the negative electrode due to the electrode sliding phenomenon, which can cause a decrease in the lifetime of the battery, and furthermore, can cause explosions and fire accidents.

Nevertheless, when isostatic pressurization (WIP) is performed to create an interfacial bond between the electrode and the solid electrolyte (30: metal plate used during isostatic pressurization), as shown in FIG. 2, the end portion (or lateral portion) of the negative electrode (10) located at the upper portion is bent, and the solid electrolyte layer and the negative electrode layer are prone to cracking in the course of the process, and since a proper pressure cannot be applied to this portion during operation, lithium dendrite growth is prone to occur, and a short phenomenon occurs. In other words, since conventional all-solid-state batteries have the form shown in FIG. 1 or 2, a short phenomenon occurs between the end portion of the upper negative electrode and the lateral portion of the end of the positive electrode facing the negative electrode during operation.

However, the present applicant configured the positive electrode active material layers (200b, 200c) located on both sides of the positive electrode current collector (200a) to have different lengths, and further configured the negative electrode layer (upper negative electrode layer (100) in FIG. 3) facing the relatively short positive electrode active material layer (200b) to have the same or shorter length than that of the relatively long positive electrode active material layer (200c). Further, due to the form of the electrode, the present invention has the advantage of alleviating the bending of the negative electrode after isostatic pressurization (i.e., creating conditions in which lithium dendrite growth is difficult to occur), thereby suppressing a short phenomenon between the positive electrode and the negative electrode that occurs during battery operation.

More specifically, all positive electrode layers (200) included in the electrode assembly according to the present invention are provided with a first positive electrode active material layer (200b) and a second positive electrode active material layer (200c) respectively on both sides of a positive electrode current collector (200a). In addition, the lengths of the positive electrode active material layers (200b, 200c) located on both sides of the positive electrode current collector (200a) should be different. For example, referring to FIG. 3, in a positive electrode layer (200), the relatively shorter positive electrode active material layer corresponds to the first positive electrode active material layer (200b), and the relatively longer positive electrode active material layer corresponds to the second positive electrode active material layer (200c). Thus, the extent to which the negative electrode active material layer is bent after being isostatically pressurized is alleviated. Furthermore, as shown in FIGS. 3 and 4, because the length of the negative electrode active material layer facing the relatively shorter positive electrode active material layer is equal to or shorter than the length of the relatively longer positive electrode active material layer, the negative electrode active material layer facing the first positive electrode active material layer (200b) does not contact the second positive electrode active material layer (200c), which is longer than the first positive electrode active material layer (200b), after being isostatically pressurized.

The length ratio of the second positive electrode active material layer (200c) and the first positive electrode active material layer (200b) may be 1 : 0.3 to 0.9, preferably 1 : 0.3 to 0.7, more preferably 1 : 0.5 to 0.6. If the length ratio of the second positive electrode active material layer (200c) and the first positive electrode active material layer (200b) falls outside the above range, the first positive electrode active material layer (200b) may not function properly, or the length difference between the first positive electrode active material layer (200b) and the negative electrode layer facing it may be excessively small, thereby causing lithium (Li) precipitation on the electrode sliding portion.

This constitution of the positive electrode layer (200) is intended to adjust the length of the negative electrode layer (100) facing it to a level at which a short does not occur or can be minimized. That is, in a positive electrode layer (200), the length of the negative electrode active material layer facing the relatively shorter positive electrode active material layer (i.e., the first positive electrode active material layer (200b)) should be the same or shorter than the length of the relatively longer positive electrode active material layer (i.e., the second positive electrode active material layer (200c)). If the length of the negative electrode active material layer facing the first positive electrode active material layer (200b) is longer than the length of the second positive electrode active material layer (200c), the negative electrode active material layer may be bent to the lateral portion of the second positive electrode active material layer (200c), thereby increasing the possibility of short during operation.

Furthermore, although the present invention specifies the negative electrode active material layer facing the first positive electrode active material layer (200b) to have the length which is the same or shorter than that of the second positive electrode active material layer (200c), this is to prevent a short phenomenon between the positive electrode and the negative electrode as much as possible, as described above. Therefore, if the length of the negative electrode active material layer facing the first positive electrode active material layer (200b) is configured to be longer than that of the second positive electrode active material layer (200c) at a level that does not cause a short phenomenon, it also falls under the scope of the present invention.

On the other hand, as described above, the length of the negative electrode active material layer facing the first positive electrode active material layer (200b) may be shorter than the length of the second positive electrode active material layer (200c), but should be equal to or longer than the length of the first positive electrode active material layer (200b). However, it is preferable that the length of the negative electrode active material layer facing the first positive electrode active material layer (200b) is longer than the length of the first positive electrode active material layer (200b). Otherwise, lithium (Li) may be precipitated on the electrode sliding portion, as described above.

Moreover, the length of the negative electrode active material layer facing the second positive electrode active material layer (200c) should be equal to or longer than the length of the second positive electrode active material layer (200c). However, it is preferred that the length of the negative electrode active material layer facing the second positive electrode active material layer (200c) is longer than the length of the second positive electrode active material layer (200c). Otherwise, lithium (Li) may be precipitated on the electrode sliding portion, as described above. Furthermore, the length of the negative electrode active material layer facing the second positive electrode active material layer (200c) is preferably longer than the length of the negative electrode active material layer facing the first positive electrode active material layer (200b). Furthermore, the lengths of the negative electrode active material layers provided on both sides of the negative electrode current collector may be different, but preferably the same. Furthermore, the length of the positive electrode current collector (200a) is longer than the length of the first positive electrode active material layer (200b), and is equal to or longer than the length of the second positive electrode active material layer (200c), so that the negative electrode active material layer facing the first positive electrode active material layer (200b) does not contact the second positive electrode active material layer (200c) even after being isostatically pressurized.

If the electrode assembly has the electrode shape as described above, even when isostatic pressurization (WIP) is applied for the interfacial bonding between the electrode and the solid electrolyte, the positive electrode and the negative electrode are not in contact, such that the end portion (or lateral portion) of the upper negative electrode and the end portion of the lower negative electrode are spaced apart by a considerable distance, as shown in FIG. 4, thereby eliminating or minimizing the possibility of occurrence of short phenomenon between the positive electrode and the negative electrode during battery operation (300 in FIG. 4: metal plate used for isostatic pressurization). This is a unique feature of the present invention in contrast to the conventional case (corresponding to FIG. 2) in which the end portion of the negative electrode is bent during isostatic pressurization for interfacial bonding between the electrode and the solid electrolyte, and a short phenomenon between the positive electrode and the negative electrode inevitably occurs during battery operation.

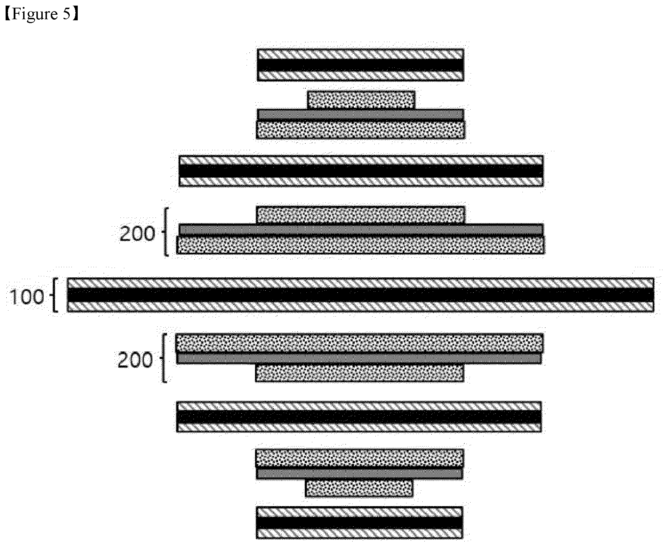

Although the present invention refers to a pyramid-shaped electrode assembly as shown in FIGS. 3 and 4 (i.e., an electrode assembly in which the laminated structure entirely forms a pyramidal shape), the present invention is not limited thereto (that is, the lamination of the electrodes is partially or wholly pyramidal). FIG. 5 is a side view schematic illustrating the lamination of the electrodes for an all-solid-state battery according to another embodiment of the present invention. That is, as shown in FIG. 5, the present invention also provides an embodiment for an electrode assembly in which the constitution provided on the upper portion of the negative electrode layer (100) centrally located in the direction of lamination is equally provided on the lower portion of the centrally located negative electrode layer (100), so that the electrode assembly is vertically symmetrical about the centrally located negative electrode layer (100) (in the negative electrode layer (100) of FIG. 5, the center portion is a negative electrode current collector, and the hatched portions provided on both sides thereof correspond to negative electrode active material layers).

In other words, the lengths of the laminated negative electrode layers gradually become shorter as they go toward the top and bottom of the centrally located negative electrode layer, and the lengths of the laminated positive electrode layers become shorter as they go toward the top and bottom of the centrally located negative electrode layer. In addition, the electrode assembly has a structure in which the positive electrode layers and the negative electrode layers are alternately laminated at the upper and lower portions of the centrally located negative electrode layer, thereby forming a vertical symmetry structure. In addition, the length of the centrally located negative electrode layer is longer than the lengths of the remaining negative electrode layers and the lengths of the positive electrode layers, so that the upper and lower portions of the centrally located negative electrode layer each form a pyramidal shape. In addition, when the upper and lower portions are symmetrical, like the electrode assembly shown in FIG. 5, it is desirable to constitute the lower portion of the electrode assembly in the same shape as the upper portion of the electrode assembly, first apply isostatic pressure, and then flip it over and stack the electrodes sequentially.

Furthermore, as long as the electrode of the present invention can prevent or minimize a short phenomenon, the electrode assembly can be configured in various forms without any particular limitation. For example, the present invention also provides one embodiment of an electrode assembly in which the unit cell (one negative electrode layer (100) + one positive electrode layer (200)) is removed from the upper and lower portions, respectively, with reference to FIG. 5. The present invention also provides one embodiment of an electrode assembly in which the unit cell (one negative electrode layer (100) + one positive electrode layer (200)) is removed from either of the upper or lower portion with reference to FIG. 5. Moreover, the present invention provides one embodiment of an electrode assembly that further includes a separate unit cell (one negative electrode layer + one positive electrode layer) in the upper and lower portions, with reference to FIG. 5. Furthermore, the present invention provides one embodiment of an electrode assembly further comprising a unit cell (one negative electrode layer + one positive electrode layer) in either of the upper or lower portion, with reference to FIG. 5. It is obvious that the foregoing descriptions with reference to FIGS. 3 and 4 are equally applied to other embodiments.

Next, the secondary battery according to the present invention is described below. The secondary battery includes the electrode assembly of the present invention as described above and a storage case for receiving the electrode assembly. The use of the secondary battery is not particularly limited. The secondary battery may be any battery capable of accommodating an electrode assembly in a storage case, such as a pouch.

In the secondary battery according to the present invention, the positive electrode may comprise a positive electrode active material, a conductive material and a binder in a granular form. The positive electrode active material can be any positive electrode active material used for a lithium ion secondary battery without any particular limitation. The positive electrode active material may be a lithium transition metal oxide comprising one or more transition metals. For example, the positive electrode active material may be selected from the group consisting of LiCoO₂, LiNiO₂, LiMnO₂, Li₂MnO₃, LiMn₂O₄, Li(NiₐCo_{b}Mn_{c})O₂ (wherein 0<a<1, 0<b<1, 0<c<1, and a+b+c=1), LiNi_{1-y}Co_{y}O₂ (wherein 0<y<1), LiCo_{1-y}Mn_{y}O₂, LiNi_{1-y}Mn_{y}O₂ (wherein 0<y<1), Li(NiₐCo_{b}Mn_{c})O₄ (wherein 0<a<2, 0<b<2, 0<c<2, and a+b+c=2), LiMn_{2-z}Ni_{z}O₄ (wherein 0<z<2), LiMn_{2-z}Co_{z}O₄ (wherein 0<z<2), and combinations thereof.

Furthermore, the binder is mixed with the positive electrode active material, which consists of powdered particulates, and the conductive material, to bind the respective components, thereby aiding in the growth of the particles. Since sulfide-based solid electrolytes, for example, have moisture-sensitive properties, such as the generation of H₂S gas upon contact with moisture, it is desirable to exclude as much moisture as possible from the formation of the granules. The binder may be an organic binder, wherein the organic binder means a binder that is soluble or dispersible in an organic solvent, in particular N-methylpyrrolidone (NMP), as distinguished from an aqueous binder wherein water is the solvent or dispersing medium. For example, the binder may be selected from the group consisting of, but not limited to, polyvinylidene fluoride (PVDF), vinylidene fluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylenepropylene-diene monomer (EPDM), sulfonated EPDM, styrene-butylene rubber and fluorinated rubber.

In the secondary battery according to the present invention, the solid electrolyte may comprise at least one selected from a sulfide-based solid electrolyte, a polymer-based solid electrolyte, and an oxide-based solid electrolyte, and may preferably comprise only a sulfide-based solid electrolyte. The sulfide-based solid electrolyte may comprise a lithium salt, wherein the lithium salt is an ionizable lithium salt, which may be represented by Li⁺X⁻. The negative ion of the lithium salt is not particularly limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻; CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ or (CF₃CF₂SO₂)₂N⁻.

Furthermore, the sulfide-based solid electrolyte contains sulfur (S) and has the ionic conductivity of metals from Group 1 or 2 of the periodic table, and may include a Li-P-S-based glass or a Li-P-S-based glass-ceramic. Non-limiting examples of such sulfide-based solid electrolyte include Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and the sulfide-based solid electrolyte may comprise one or more selected therefrom.

The solid electrolyte can function as a separating film in a typical lithium secondary battery (that is, electrically isolating the negative electrode and the positive electrode while allowing lithium ions to pass through). Meanwhile, the secondary battery can be utilized as a semi-solid-state battery by including a liquid electrolyte as needed, wherein a separate polymeric separating film may be further required.

In the secondary battery according to the present invention, the negative electrode may comprise a negative electrode active material that can be used in a lithium ion secondary battery. For example, the negative electrode active material may include one or more selected from the group consisting of carbon such as anthracite or graphitized carbon; metal complex oxide such as LiₓFe₂O₃ (wherein 0≤x≤1), LiₓWO₂ (wherein 0≤x≤1), or SnₓMe₁₋ₓMe'_{y}O_{z} (wherein Me is Mn,Fe,Pb or Ge; Me' is Al, B, P, Si, Group 1, 2 or 3 elements of the periodic table, or halogens; 0<x≤1; 1≤y≤3; and 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ or Bi₂O₅; conductive polymer such as polyacetylene; Li-Co-Ni based material; titanium oxide; and lithium titanium oxide.

The present invention also provides a battery module comprising the secondary battery as a unit cell, a battery pack comprising the battery module, and a device comprising the battery pack as a power source. Specific examples of such devices include, but are not limited to, a power tool powered by an electric motor; an electric vehicle, including an electric vehicle (EV), a hybrid electric vehicle (HEV) and a plug-in hybrid electric vehicle (PHEV); an electric two-wheeler, including an electric bicycle (E-bike) and an electric scooter; an electric golf cart; and a power storage system.

Hereinafter, Examples are presented to facilitate an understanding of the present invention. The following Examples are provided to illustrate the present invention, but it is obvious to those skilled in the art that various changes and modifications can be made within the scope and the technical idea of the present invention, and it is also obvious that such changes and modifications fall within the scope of the appended claims.

### [Example 1] Manufacture of a secondary battery

As shown in FIG. 3, a pyramid-shaped C-type bicell was prepared, wherein the negative electrode layer is positioned on each of the upper and lower portions of the positive electrode layer in which the positive electrode active material layers are provided on both sides of the positive electrode current collector, and solid electrolyte layers are each provided between the positive electrode layer and the negative electrode layer. The length of the lower positive electrode active material layer is longer than the length of the upper positive electrode active material layer, the length of the upper negative electrode layer is the same as the length of the lower positive electrode active material layer, and the length of the lower negative electrode layer is longer than the length of the lower positive electrode active material layer. The bicell was then placed on a metal plate and isostatically pressurized (WIP).

### [Comparative Example 1] Manufacture of a secondary battery

As shown in FIG. 1, a conventional C-type bicell was prepared, wherein the negative electrode layer is positioned on each of the upper and lower portions of the positive electrode layer in which the positive electrode active material layers are provided on both sides of the positive electrode current collector, and solid electrolyte layers are each provided between the positive electrode layer and the negative electrode layers. The length of the lower positive electrode active material layer and the length of the upper positive electrode active material layer are the same, the length of the upper negative electrode layer and the length of the lower negative electrode layer are the same, and the length of the negative electrode layers is longer than the length of the positive electrode active material layer. The bicell was then placed on a metal plate and isostatically pressurized (WIP).

### [Experimental Example 1] Evaluation of battery charge and discharge

The secondary batteries prepared in Example 1 and Comparative Example 1 were charged and discharged under the following conditions to observe the conditions of the batteries and to evaluate the life characteristics and capacity of the batteries. The evaluation temperature was 25 °C.

### [Charge and discharge conditions].

2 cycles at 0.1C, 1 cycle at 0.1C/0.33C, 1 cycle at 0.1C/0.5C, 1 cycle at 0.1C/1C, 1 cycle at 0.1C/0.1C, repeating cycles at 0.1C/0.33C (Voltage range: 4.25V-3V)

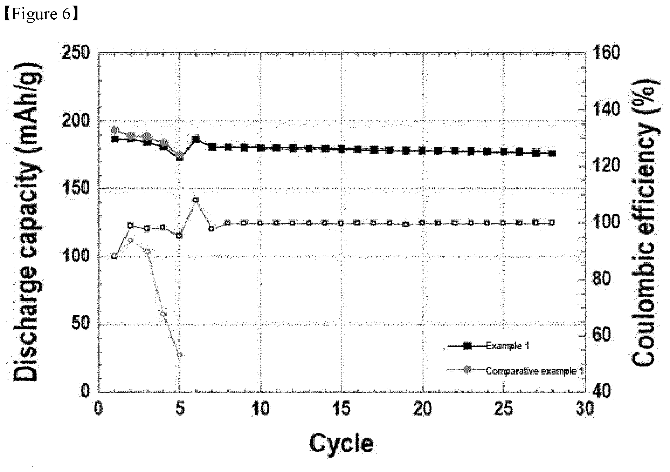

As a result of observing the conditions of the batteries while charging and discharging the batteries as described above, it was confirmed that the battery manufactured in Example 1 operated normally, while the battery manufactured in Comparative Example 1 experienced a short phenomenon during charging and the battery incompletely operated. FIG. 6 is a graph comparing and contrasting the life characteristics and capacity of secondary batteries manufactured according to the working example and the comparative example of the present invention. As shown in FIG. 6, the battery manufactured in Comparative Example 1 was not able to charge and discharge normally due to a short phenomenon, while the battery manufactured in Example 1 was able to charge and discharge normally because it was operated without a short phenomenon. Therefore, it can be seen that, when the electrode assembly or battery includes the electrode shape of the present invention, a short phenomenon does not appear during operation unlike conventional batteries, and accordingly the performance of the battery is improved.

### [Reference numerals].

10, 100: Negative electrode layer (100a: negative electrode current collector, 100b: negative electrode active material layer)
20, 200: Positive electrode layer (200a: positive electrode current collector, 200b: first positive electrode active material layer, 200c: second positive electrode active material layer)
30, 300: Metal plate

## Claims

1. An electrode assembly, wherein a negative electrode layer having negative electrode active material layers on both sides of a negative electrode current collector; and a positive electrode layer having a first positive electrode active material layer and a second positive electrode active material layer respectively on both sides of a positive electrode current collector are alternately laminated, and solid electrolyte layers are each placed between the negative electrode layer and the positive electrode layers, respectively,
wherein, in the positive electrode layer, the first positive electrode active material layer and the second positive electrode active material layer have different lengths extending from the centerline of the positive electrode current collector in the directions of both ends of the positive electrode current collector,
wherein the length of the negative electrode active material layer facing the relatively short first positive electrode active material layer is equal to or shorter than the length of the relatively long second positive electrode active material layer.

2. The electrode assembly of claim 1, **characterized in that** the length of the negative electrode active material layer facing the first positive electrode active material layer is equal to or greater than the length of the first positive electrode active material layer.

3. The electrode assembly of claim 1, **characterized in that** the length of the negative electrode active material layer facing the second positive electrode active material layer is equal to or greater than the length of the second positive electrode active material layer.

4. The electrode assembly of claim 1, wherein the negative electrode active material layers provided on both sides of the negative electrode current collector have the same length.

5. The electrode assembly of Claim 1, wherein the negative electrode active material facing the first positive electrode active material layer and the second positive electrode active material layer are not in contact even after being isostatically pressurized.

6. The electrode assembly of claim 5, **characterized in that** the length ratio of the second positive electrode active material layer to the first positive electrode active material layer is from 1 : 0.3 to 0.9.

7. The electrode assembly of claim 5, **characterized in that** the lengths of the laminated negative electrode layers become gradually shorter as they go toward the top and bottom of the centrally located negative electrode layer, and
the lengths of the laminated positive electrode layers gradually decrease as they go toward the top and bottom of the centrally located negative electrode layer.

8. The electrode assembly of claim 7, **characterized in that** the length of the centrally located negative electrode layer is greater than the lengths of the remaining negative electrode layers and the lengths of the positive electrode layer, such that the upper and lower portions of the remaining negative electrode layer each form a pyramidal shape.

9. A secondary battery comprising the electrode assembly of claim 1; and a storage case receiving the electrode assembly.
